# EUROPÄISCHE PATENTSCHRIFT

(11) **EP 1 802 883 B1**
(45) Veröffentlichungstag und Bekanntmachung des Hinweises auf die Patenterteilung: **05.05.2010**
(21) Anmeldenummer: 05792751.9
(22) Anmeldetag: 28.09.2005
(51) Int. Cl.: F16D 65/092, F16D 65/14, F16D 65/38, B60T 13/74

(54) **SCHEIBENBREMSE IN SELBSTVERSTÄRKENDER BAUART**
SELF-AMPLIFYING DISK BRAKE
FREIN A DISQUE DE TYPE SERVOFREIN

(30) Priorität: 13.10.2004 DE 102004050065; 04.04.2005 DE 102005015408; 30.06.2005 DE 102005030621
(43) Veröffentlichungstag der Anmeldung: 04.07.2007
(73) Patentinhaber: KNORR-BREMSE Systeme für Nutzfahrzeuge GmbH, 80809 München (DE)
(72) Erfinder: BAUMGARTNER, Johann, 85368 Moosburg (DE); SEIDENSCHWANG, Matthias, 80637 München (DE); BIEKER, Dieter, 83080 Oberaudorf (DE); GANZHORN, Dirk, 84034 Landshut (DE)
(74) Vertreter: Mattusch, Gundula
(86) Internationale Anmeldenummer: PCT/EP2005/010449
(87) Internationale Veröffentlichungsnummer: WO 2006/040006

(56) Entgegenhaltungen:
- EP-B- 0 953 785
- WO-A-03/071150
- WO-A-03/100282
- DE-A1- 10 151 950
- US-A- 6 008 604

## Beschreibung

Die Erfindung betrifft eine Scheibenbremse in selbstverstärkender Bauart nach dem Oberbegriff des Anspruchs 1. So eine Bremse geht z.B. aus WO-A-03/071150 hervor.

Selbstverstärkende Bremsen sind in verschiedensten Ausgestaltungen bekannt. So stellen eine klassische Bauart selbstverstärkender Bremsen die Trommelbremsen dar, wo eine Bremsbacke auflaufend angeordnet ist, so dass die Reibungskräfte zwischen Bremsbelag und Trommel die Spannkraft unterstützen.

Bei Scheibenbremsen ging man dagegen in der Vergangenheit davon aus, dass es gerade einen wesentlichen Vorteil dieser Bremsenbauart darstellt, dass bei ausschließlich senkrecht zur umlaufenden Bremsscheibe angreifenden Bremsbelägen, auf die nur eine parallel zur Bremsscheibenachse wirkende Betätigungseinrichtung mit einer derart ausgerichteten Kraft einwirkt, kein selbstverstärkender Effekt auftritt. Dies galt um so mehr bei Scheibenbremsen für schwerere Nutzfahrzeuge, bei denen die Betätigung vorzugsweise hydraulisch oder pneumatisch erfolgt.

Sollen allerdings auch bei schwereren Nutzfahrzeugen Scheibenbremsen mit elektromotorisch betriebenen Betätigungseinrichtungen eingesetzt werden, wird die selbstverstärkende Scheibenbremse zur Option, da sie die Möglichkeit dazu eröffnet, den Elektromotor aufgrund der Selbstverstärkung der Bremse kleiner zu dimensionieren, als dies bei einer nicht selbstverstärkenden Schiebenbremse möglich wäre.

Selbstverstärkende Scheibenbremsen sind an sich in verschiedensten Ausführungsformen bekannt. Die Mehrzahl der beschriebenen Lösungen beschreibt allerdings Wirkprinzipien, welche zwar eine Selbstverstärkung ermöglichen, die aber i.allg. aufgrund mangelnder Praxistauglichkeit sowie-aufgrund eines umständlichen konstruktiven Aufbaus nicht zur Realisierung einer serienreifen, wirtschaftlich herstellbaren Scheibenbremse für schwere Nutzfahrzeuge geeignet sind und daher oftmals das Stadium theoretischer Überlegungen nicht überschritten haben.

Vor diesem Hintergrund ist es die Aufgabe der Erfindung, eine elektromechanisch betriebene, selbstverstärkende Scheibenbremse zu schaffen, die bei einfacher Konstruktion kostengünstig herstellbar ist. Sie soll vorzugsweise auch den Vorteil bieten, dass der Leistungsbedarf des elektromotorischen Antriebs gegenüber vergleichbaren direkt elektromechanisch betätigten Bremsen durch effiziente Selbstverstärkung auch im Grenzbereich des Bremsbelagreibbeiwertes minimiert wird.

Die Erfindung löst diese Aufgabe durch den Gegenstand des Anspruchs 1.

Die selbstverstärkende Bremse wird in einfacher Weise mit einer Nachstellvorrichtung kombiniert. Die Zustellung der Bremse in Richtung der Bremsscheibe bzw. senkrecht zur Bremsscheibe erfolgt mittels der Bremsstempel, indem deren Länge axial verändert wird. Die Zustellung in Umfangsrichtung bzw. parallel zur Scheibe erfolgt auf andere Weise, so z.B. mit einer Kurbel. Die Bremsstempel sind auch zur Nachstellung von Bremsbelagverschleiß mit nutzbar. Bei Bremsungen ergeben sich vorteilhaft verschiedenste Optionen, die nachfolgend näher erörtert werden.

Die Erfindung realisiert vorzugsweise ferner eine Auslegung der Zuspanneinheit derart, dass sie gleichförmige Drehungen einer Ausgangswelle des elektromotorischen Antriebs während einer Zuspannbewegung in eine Bewegung des Bremsbelages umsetzt, deren Bewegungskomponente zumindest in tangentialer *Richtung (Richtung U) nicht linear ist.

Vorteilhafte Ausgestaltungen sind den Unteransprüchen zu entnehmen.

Mit der Erfindung werden nicht nur die Herstellkosten einer Bremsanlage für Nutzfahrzeuge reduziert sondern es wird auch deutlich der Leistungsbedarf des elektromotorischen Antriebs gegenüber vergleichbaren direkt elektromechanisch betätigten Bremsen durch eine effiziente Selbstverstärkung auch im Grenzbereich des Bremsbelagreibbeiwertes minimiert. Nach besonders vorteilhaften Varianten ist es sogar möglich, den Leistungsbedarf gegenüber anderen bekannten selbstverstärkenden Konzepten deutlich zu verringern.

Dabei ist es auch möglich, im Vergleich zu modernen Drückluftbremsen die gleichen Leistungsanforderungen zu erfüllen und auch den gleichen vorgegebenen Einbaubedingungen und Gewichtsvorgaben gerecht zu werden.

Das verstellbare Rampensystem kann auch genutzt werden, um eine zuverlässige und auch bei infolge Abkühlung schrumpfender Reibkörper selbsttätig nachstellende Parkbremse zu realisieren. Ein weiterer wesentlicher Vorteil der Erfindung ist daher darin zu sehen, dass mit der vorgeschlagenen Scheibenbremse auch eine zuverlässig wirkende Parkbremse ohne zusätzlich notwendige Betätigungskomponenten realisiert wird.

Hierzu muss der Rampenwinkel mit der größten Selbstverstärkung so bemessen sein, dass auch bei dem niedrigsten denkbaren Belagreibwert noch eine Selbstverstärkung möglich ist.

Bei eingelegter Bremse ergibt sich somit eine ausschließlich mechanische Haltewirkung der Bremse. Bei Schrumpfen von Bremsbelägen u./o. Bremsscheibe oder bei einem während der Abstellphase auftretenden Reibwertabfall erfolgt ein selbsttätiges Nachstellen der Bremse und Nachjustieren der Selbstverstärkung derselben um das Fahrzeug im Stillstand zu halten.

Vorzugsweise wird der elektromotorische Antrieb mit einer Steuerungs- und/oder Regelungseinrichtung gekoppelt, die dazu ausgelegt ist, die Position des Stellgliedes bzw. Bremsbelages zu steuern oder zu regeln. Nach Vorgaben einer übergeordneten Einheit (z.B. ein Steuergerät) wird dabei die Position der Bremsbelageinheit eingestellt.

Diese Steuerungs- und/oder Regelungseinrichtung wird bevorzugt wie folgt betrieben:
Basis des bevorzugten Regelungskonzeptes ist eine Abbremsungs- bzw. Verzögerungsregelung des Fahrzeuges, wie sie in heutigen EBS geregelten Fahrzeugen mit Druckluft-Bremsanlage üblich ist.

Nachfolgend wird die Erfindung unter Bezug auf die Zeichnung anhand von Ausführungsbeispielen näher beschrieben. Es zeigen:
Fig. 1 - 3 jeweils Skizzen, welche nach Art von Schnittansichten den prinzipiellen Aufbau verschiedener Varianten erfindungsgemäßer Scheibenbremsen veranschaulichen;
Fig. 4 eine weitere Skizze zur Veranschaulichung der prinzipiellen Funktion der Scheibenbremsen aus Fig. 1 bis 4;
Fig. 5 eine als Schnittansicht gehaltene Skizze einer weiteren erfindungsgemäßen Scheibenbremse; und
Fig. 6 verschiedene Ansichten eines Teilbereiches eines Druckstempels, in Fig. 6a mit Druckelement zur Anlage an einer Bremsbelageinheit.

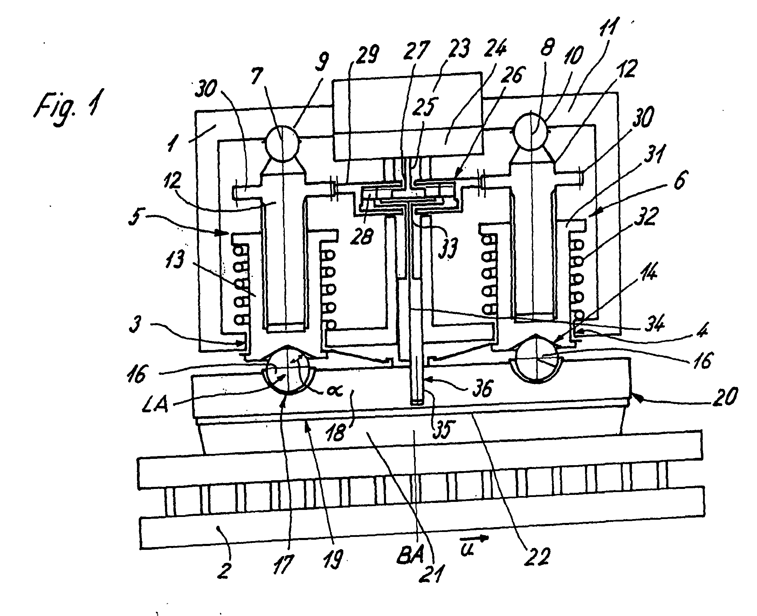

Die dargestellte Konzeptvarianten werden mit ihren wesentlichen Merkmalen nachfolgend beschrieben:
Zunächst _ sei näher das Funktionsprinzip der Fig. 1 mit einer nicht verstellbaren Rampensteigung in den Druckflächen 5, 6 der Bremsstempel beschrieben.

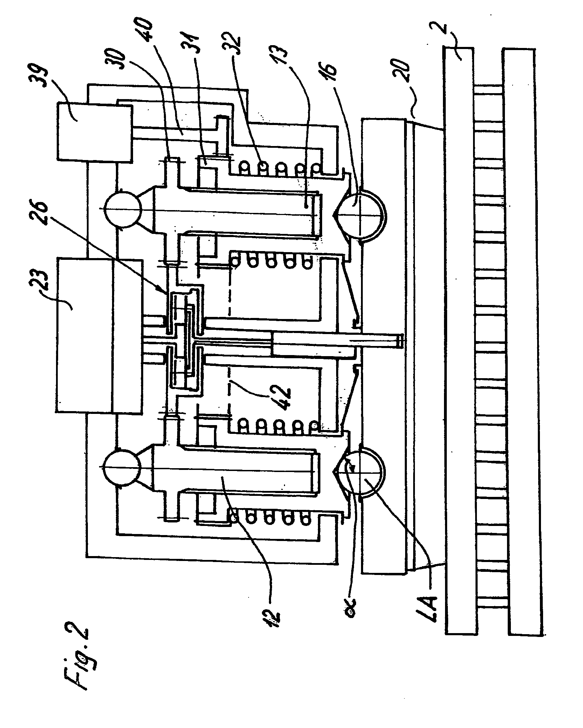

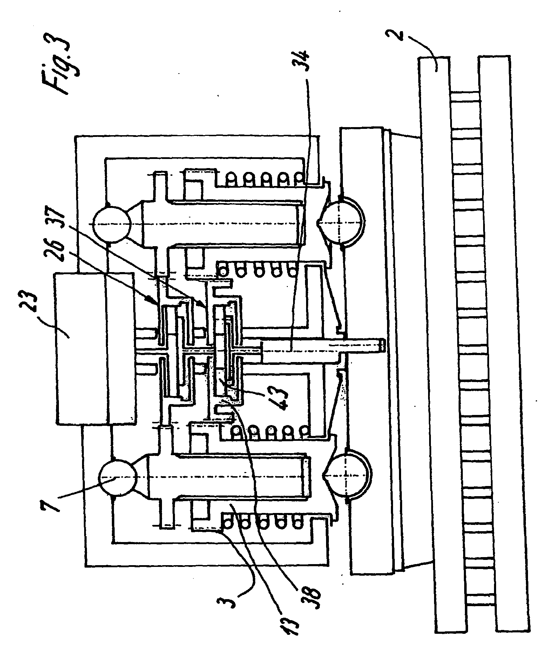

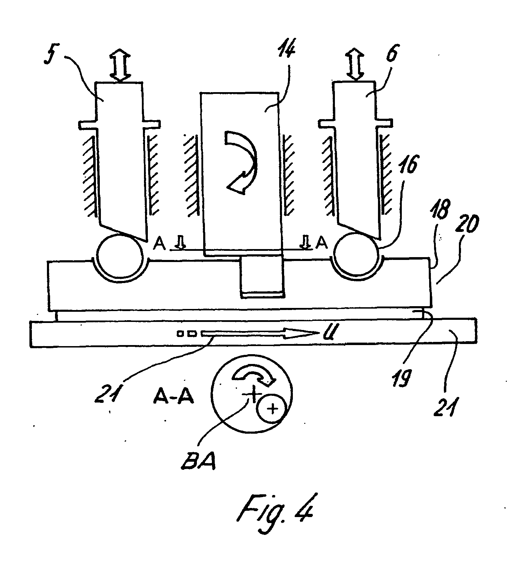

Fig. 3 zeigt sodann eine Variante mit stufenlos verstellbarer und Fig. 2 eine Variante mit gestuft verstellbarer Rampensteigung. Fig. 4 veranschaulicht im Zusammenspiel mit Fig. 1 das Grundfunktionsprinzip.

Bevorzugt bauen die erfindungsgemäßen Scheibenbremsen auf einem Festsattelkonzept auf, bei dem ein ein- oder mehrteiliger Bremssattel 1 (auch Bremsengehäuse genannt) relativ zu einer Bremsscheibe 2 unbeweglich an einer Radachse befestigt ist.

Basis der nachfolgend beschriebenen Konzept ist insofern eine Festsattelbremse mit zumindest äußerer - reaktionsseitiges - elektromechanisch betätigter und elektronisch geregelter Verschleißnachstellung, die von einer zuspannseitigen Verschleißnachstellung mit Hilfe der Bremsstempel ergänzt werden kann, wenn diese zu diesem Zweck genutzt werden.

Das Wirkprinzip und die beschriebenen Merkmale sind prinzipiell auch für andere Bremsenbauarten, wie z.B. Schiebesattel- oder Schwenksattelbremsen, anwendbar. Lediglich der die Bremsbetätigung beinhaltende Sattelkopf der mechanisch/pneumatisch betätigten Basisbremse wird ersetzt durch die elektromechanischer Zuspanneinheit mit Selbstverstärkung.

Eine Festsattelbremse mit pneumatisch betätigter Zuspanneinrichtung dieser Art zeigen z.B. die DE 36 10 569 A1, die DE 37 16 202 A1 oder die EP 0 688 404 A1. Eine Festsattelbremse mit elektromotorischer Nachstellung zeigt die WO 02/14 708 A1. Derartige elektromotorische Nachtstelleinrichtungen können bei der vorgeschlagenen Ausführungsbeispielen - wenn gewünscht - jeweils zumindest reaktionsseitig angeordnet werden.

In Fig. 1 ist der Bremssattel 1 lediglich in seinem zuspannseitigen Bereich angedeutet. In der Praxis umgreift er vorzugsweise rahmenartig den oberen Umfangsbereich der Bremsscheibe und ist an einem (hier nicht zu erkennenden Achsflansch) befestigt.

Der Bremssattel 1 weist an seiner der Bremsscheibe 2 mit einer Bremsscheibendrehachse zugewandten Seite eine oder mehrere, vorzugsweise zwei Öffnungen 3, 4 und eine korrespondierende Anzahl von Bremsstempeln 5, 6 (hier zwei) auf, die parallel zur Bremsscheibenachse BA ausgerichtet sind.

Nach Fig. 1 bis 4 sind jeweils zwei Bremsstempel 5, 6 parallel zueinander angeordnet.

Die beiden Bremsstempel 5, 6 bzw. Nachstellkolben stützen sich jeweils direkt oder über zwischengeschaltete Elemente; hier Gleitlagerschalen 9, 10; an der bremsscheibenabgewandten Rückwand 11 des Bremssattels ab. Als Lagereinrichtungen werden vorzugsweise Kugeln, 7, 8 mit Gleitlagerschalen 9 eingesetzt.

Die Lagereinrichtungen sind derart ausgelegt, dass sie eine Drehung der Bremsstempel 5, 6 bzw. Nachstellkolben um ihre eigene Längsachse LA erlauben.

Dabei sind jeweils im Bremsstempel 5, 6 und im Bremssattel kugelsegmentartige (kalottenartige) Ausnehmungen ausgebildet, von denen in eine (hier in die im Bremssattel) die Gleitlagerschalen 9, 10 eingesetzt ist, so dass sich die Kugeln 7, 8 relativ zur Gleitlagerschale drehen können.

Alternativ können die Kugeln 7, 8 auch als kugelförmige Ansätze an den zum Bremssattel gewandten Enden der Bremsstempel 5, 6 ausgebildet sein (hier nicht dargestellt), die dann in korrespondierende Ausnehmungen im Bremssattel mit Gleitlagerschalen eingreifen.

Denkbar sind anstelle der Kugeln und Ausnehmungen auch ebene Gleitlager oder ringförmige Lager oder dgl.. (hier nicht dargestellt).

Die Bremsstempel 5, 6 weisen jeweils eine mit einem Außengewinde versehene Spindel 12 auf, auf der eine hülsenartige Mutter 13 mit einem korrespondierenden Innengewinde verdrehbar angeordnet ist. Dieses Gewinde kann je nach Auslegung nicht selbsthemmend oder selbsthemmend sein.

Die Muttern 13 weisen an ihrer von der Bremsscheibe abgewandten Seite einen Flansch 31 auf, wobei zwischen dem Flansch 31 und der Innenwandung des Bremssattels 1 jeweils Druckfedern 32 wirken, welche die Mutter 13 konzentrisch umfassen und auf den Flansch eine vorgegebene Kraft ausüben bzw. den Flansch 31 relativ zur Bremssattelinnenwandung vorspannen.

Alternativ wird die gesamte Mechanik gegen die Druckplatte verspannt.

Nach Fig. 1 bis 4 ist die Mutter 13 jedes Bremsstempels 5, 6 an der zur Bremsscheibe zugewandten Seite angeordnet und die Spindel 12 an der zum Bremssattelinneren gewandten Seite. Eine umgekehrte Anordnung wäre auch denkbar (hier nicht dargestellt).

Durch Verschrauben der Mutter 13 auf der Spindel kann die axiale Länge jedes einzelnen derart ausgebildeten Bremsstempels 5, 6 - beispielsweise zum Ausgleich von Bremsbelagverschleiß und beim Anlegen der Beläge an die Bremsscheibe 2 - verstellt werden.

An ihrer der Bremsscheibe zugewandten Seite, also an ihren Druckflächen, sind die Bremsstempel 5, 6, hier die Muttern 13, jeweils mit einer rampenartigen Ausnehmung oder Kontur 14 versehen, deren tiefste Stelle vorzugsweise im Bereich der Längsachse der Bremsstempel liegt.

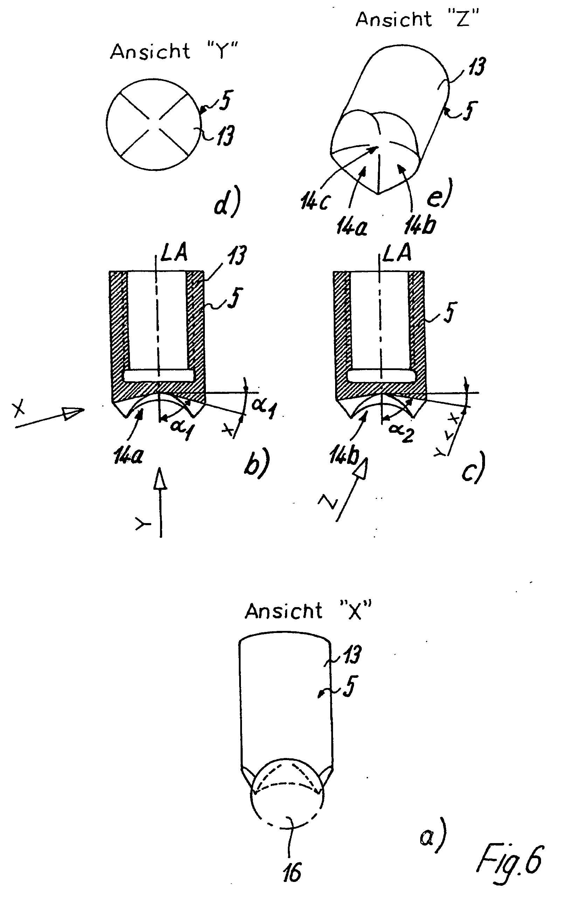

Dies ist besonders gut in Fig. 6 zu erkennen. Nach Fig. 6 sind zwei um 90° zueinander verdrehte "Laufbahnen" bzw. Konturen 14a, 14b in den Muttern 13 der Bremsstempel 5, 6vorgesehen, die jeweils einen verschieden großen Öffnungswinkel +α1, -α1; +α2, - α2 zur Längsachse LA aufweisen. Durch Drehung der Bremsstempel 5, 6 um 90° - bzw. hier der Muttern 13 - um ihre Längsachse kann entweder die eine oder die andere Kontur 14a, b genutzt werden, wenn die Bremse zugespannt wird, was zu unterschiedlichem Verhalten der Bremse führt (wird nachher noch näher erläutert). Die eine Hälfte jeder "Doppelrampe" +α; -α kann in Vorwärts- und die andere in Rückwärtsfahrtrichtung genutzt werden.

Die Ausnehmungen bzw. Laufbahnen 14 werden- kegelförmig mit konstantem Öffnungs- bzw. Rampenwinkel α zur Längsachse LA oder aber z.B. nach einer besonders bevorzugten Variante vorzugsweise nach Art einer veränderlichen Kegelflächenkontur, z.B. Ovalkegelkontur ausgebildet, deren Rampenwinkel α relativ zu den Längsachsen LA der Bremsstempel 5, 6 sich in Umfangsrichtung (relativ zur Längsachse LA der Bremsstempel) verändert (z.B. stufenweise (Fig. 6) oder kontinuierlich).

In die Ausnehmungen 14 greifen jeweils Rollkörper 16 ein, die hier in bevorzugter Ausgestaltung als Kugeln 16 ausgebildet sind.

Die tiefste Stelle 14c (Fig. 6) der Rampen ist jeweils vorteilhaft so ausgestaltet, dass die Rollkörper, insbesondere Kugeln an der tiefsten Stelle verrastet sind und nur gegen eine Mindestrastkraft aus der Vertiefung lösbar sind, was eine definierte Ruhezustand sichert.

Alternativ wären nach einer alternativen Ausführungsform auch z.B. zylindrische oder auf sonstige Weise geformte Rollkörper (z.B. Tonnen) denkbar, die dann z.B. auf einer rinnenartigen Ausnehmung in den Bremsstempeln abrollen würden. Hiermit wären allerdings - wie nachfolgend deutlich werden wird - nicht alle der Ausführungsformen der Erfindung realisierbar, die in den Fig. 1 bis 3 wiedergegeben sind. Realisierbar wäre aber ein Ausführungsbeispiel nach Art der Fig. 1 mit einer Rinne in den Druckflächen.

Die Rollkörper 16 greifen an ihren von der Bremsscheibe abgewandten Seiten in je nach Ausgestaltung der Rollkörper ausgebildete, hier kalottenförmige Gleitlagerschalen 17, die in Ausnehmungen korrespondierender Formgebung in einer Druckplatte 18 eingesetzt sind, die an der Trägerplatte 19 eines zuspannseitigen Bremsbelages 20 mit Bremsbelagmaterial 21 anliegt, der im Bremssattel 1 parallel zur Bremsscheibendrehachse BA und in Umfangsrichtung U (bzw. Tangential bzw. parallel zur Tangentialen) relativ zur Bremsscheibe 2 beweglich angeordnet ist.

Eine Klammerfeder 22 zwischen Druckplatte 18 und Muttern 13 hält die Druckplatte 18 unter Vorspannung an den Muttern 13. Alternativ ist es auch denkbar, die Druckplatte auf andere Weise, z.B. am Gehäuse (Sattel) zu verspannen).

Zum Antrieb der Bremse dient ein elektrischer Antriebsmotor 23, dem vorzugsweise ein Untersetzungsgetriebe 24 nachgeordnet ist, dessen Abtriebswelle 25 auf ein weiteres Getriebe 26, insbesondere ein Planetengetriebe wirkt, das mittig zwischen den Spindeln angeordnet ist.

Dabei treibt die Abtriebswelle 25 ein Sonnenrad 27 des Planetengetriebes 26 , welches Planetenräder 28 mitnimmt. Die Planetenräder 28 kämmen (hier nicht detailliert dargestellt) mit dem Sonnenrad 27 und einem innen- und außenverzahnten Ring 29. Je nach Schaltzustand (Schaltbarkeit hier nicht dargestellt) setzen sie entweder den Planetenstern 33 oder den Ring 29 in Drehung. Der Ring 29 kämmt mit seiner Außenverzahnung mit Zahnrädern 30, die auf die Spindeln 12 aufgesetzt oder an diese angeformt sind.

Zum selbsttätigen Umschalten des Antriebs (z.B. ein Elektromotors) kann ein federbelasteter Kugelrastmechanismus vorgesehen sein (hier nicht dargestellt). Der Umschaltvorgang kann auch auf andere Weise realisiert werden (z.B. elektromagnetisch).

In axialer Verlängerung des Planetensterns 33 ist eine hier zylindrisch ausgebildete und parallel zur Bremsscheibenachse angeordnete Kurbel 34 vorgesehen, die an ihrer zur Bremsscheibe 2 gewandten Seite mit einem außermittig (exzentrisch) ausgebildeten, ebenfalls parallel zur Bremsscheibenachse BA parallel ausgerichteten Kurbelzapfen 35 in eine korrespondierende Öffnung 36 in einer Bremsbelageinheit eingreift, wobei die Öffnung 36 die z.B. einen zum Querschnitt des Kurbelzapfens 35 korrespondierenden Querschnitt aufweist oder aber z.B. kulissen- , insbesondere langlochartig ausgebildet ist (hier z.B. senkrecht zur Bildebene).

Im Ausführungsbeispiel der Fig. 1 besteht die Betätigungseinrichtung bzw. Zuspanneinheit aus den zwei, zum Zwecke der Verschleißnachstellung längenveränderlichen Nachstellkolben bzw. Bremsstempeln 5, 6, welche in ihrer der Bremsscheibe 2 zugewandten Druckfläche die Ausnehmungen 14 nach Art von Rampenkonturen aufweisen, an denen die Rollkörper 16 ablaufen, welche die von der Bremse erzeugte Zuspannkraft auf die Bremsbelageinheit bzw. auf die auf den Bremsbelag aufliegende Druckplatte übertragen.

In der Druckfläche der Bremsbelageinheit bzw. der Druckplatte 18 sind die Rollkörper 16 über ein entgegengesetzt gestaltetes Rampenprofil (hier nicht dargestellt) oder (bevorzugt, da die Rollkörper besonders sicher geführt sind; hier dargestellt) in dem Gleitlagerbett (Gleitlagerschalen 17) aufgenommen.

Die Bremsbelageinheit, hier bestehend aus der ein- oder mehrteiligen Kombination von Bremsbelag 20 und Druckplatte 18, wird federnd so gegen die Bremsstempel und Nachstellkolben 5, 6 gedrückt, dass die dazwischen angeordneten Rollkörper 16 zwischen der Bremsbelageinheit und den Bremsstempel elastisch eingespannt sind.

Die Betätigung der Bremse erfolgt nach einem Anlegevorgang des Bremsbelages 20 an die Bremsscheibe durch ein Verschieben der Druckplatte nebst Bremsbelag 20 parallel zur Reibfläche der Bremsscheibe in Drehrichtung bzw. Umfangsrichtung derselben.

Diese Verschiebung wird vorzugsweise durch den Kurbeltrieb 35, 36 bewirkt, der mit einem Abtriebs- und hier Kurbelzapfen 35 etwa mittig an der Druckplatte 18 der Bremsbelageinheit 18, 20 angreift und parallel zur Rotationsachse der Bremsscheibe im Zuspanngehäuse - Bremssattel - 1 gelagert wird.

Die Betätigung des Kurbeltriebes erfolgt über den elektrischen Antrieb, z.B. den Elektromotor 23 mit nachgeschaltetem Getriebe 24.

Fig. 1 zeichnet sich durch einen konstanten Rampenwinkel α aus. Damit wird ein besonders einfacher konstruktiver Aufbau erreicht, der sich durch einen robusten Aufbau, eine gute Funktionssicherheit und niedrige Herstellkosten auszeichnet. Insbesondere kann ein Elektromotor 23 erstaunlich geringer Ausgangsleistung eingesetzt werden. Dabei bieten sich die Kugeln 16 als kostengünstige Rollkörper an, die sich quasi selbst in der Rampenfläche ausrichten. Zur Erhöhung der Tragfähigkeit können die Kugeln auch in angepassten Laufrillen ablaufen.

Eine Variante mit Rollen als Rollkörpern 16 würde dagegen eine besonders geringe Hysterese aufweisen (hier nicht dargestellt).

Fig. 2 unterscheidet sich von der Variante der Fig. 1 zunächst dadurch, dass der Rampenwinkel der Ausnehmungen 14 in Umfangsrichtung um die Längsachse der Nachstellmuttern bzw. Bremskolben 5, 6 nicht konstant ist sondern veränderlich, so dass je nach Drehstellung der Muttern 13 ein verschieden steiler Rampenwinkel α vorliegt. Hierzu können für die verschiedenen Drehstellungen Kugellaufrillen mit unterschiedlicher Steigung angeordnet sein.

Damit kann die Zuspanncharakteristik auf einfache Weise verändert werden, indem die Muttern 13 verdreht werden, beispielsweise über einen separaten Verstellaktuator 39, vorzugsweise elektromechanischer Bauart (z.B. ein weiterer, kleinerer Elektromotor), der über eine Abtriebswelle 40 mit Zahnrad 41 die Mutter(n) 13 verdreht, beispielsweise, indem er mit dem Abtriebsrad 41 eine der Muttern 13 z.B. an einer Außenverzahnung ihres Flansches antreibt und die andere Mutter 13 über einem Riementrieb 42 mitgenommen wird, der beide Muttern 13 umschlingt.

Derart kann auch im Grenzbereich des Reibwertes erzielbare Selbstverstärkungsgrad von Fig. 1 zu Fig. 2 erhöht werden. Das Umschalten kann allerdings nur im gelösten Zustand erfolgend, da sich die Muttern 13 während der Zuspannungen der Bremse nicht verdrehen können.

Nach Fig. 3 verändert sich der Rampenwinkel kontinuierlich tangential um die Längsachse LA der Bremsstempel 5, 6. Dies wird für eine selbsttätige Winkelanpassung genutzt.

Hierzu ist ein zweites axial zum ersten Planetengetriebe 26 versetztes weiteres Planetengetriebe 37 einerseits zwischen die Kurbel 34 und das erste Planetengetriebe 26 geschaltet und wiederum mittig zwischen den Bremsstempel angeordnet, das einen von den Planetenrädern 43 getriebenen Abtriebsring 38 aufweist, der die außenverzahnten Muttern 13 mitnimmt, wohingegen der Planetenstern 44 dieses Planetengetriebes wiederum die Kurbel antreibt bzw. um ihre Längsachse dreht.

Hiermit ist folgender Betrieb beim Bremsenzuspannen möglich:

Das Bremsenzuspannen zergliedert sich in die Phasen
1. Überwindung des Lüftspiels,
2. Bremskraftaufbau,
3. Lösen der Bremse und
4. Lüftspieleinstellung.

### Phase 1 Überwindung des Lüftspiels

Vor einer Bremsung ist die Ausgangssituation wie folgt.

Zunächst befindet sich die Kurbel 34 in einer Nullposition (Fig. 1), in der sie zum Beispiel mittels einer federbelasteter Kugelraste gehalten ist (hier nicht dargestellt).

Die Nachstellmuttern 3 sind in dieser Situation mittels der Druckfedern 32 mit einem Reib- bzw. Haltemoment beaufschlagt, das stets größer ist als das Spindelreibmoment.

Zunächst verdreht der Antriebsmotor 23 in zustellender Drehrichtung die Spindeln 12. Der Planetenstern 33 ist dabei im Getriebe 26 durch die verrastete Kurbel blockiert. Das Außenrad bzw. der innen- und Außenverzahnte Ring 29 verdreht die Nachstellspindeln 12 nunmehr so lange in zustellender Richtung, bis der Bremsbelag 21 auf der Bremsscheibe 2 zur Anlage kommt.

Die Nachstellmuttern 13 sind dabei durch ein ausreichend hohes Haltemoment am Verdrehen gesichert.

Durch die sich aufbauende Reaktionskraft gehen sodann die Nachstellspindeln bzw. Bremsstempel 5, 6 an der vorzugsweise - aber nicht zwingend - beweglichen Bremsscheibe 2 (axial beweglich bei einem Festsattel), die am reaktionsseitigen Belag (hier nicht dargestellt) zur Anlage kommt, auf Block.

### Phase 2 Bremskraftaufbau

Als Folge der blockierten Nachstellspindeln 12 steigt das Antriebsmoment auf die Kurbel 34 nunmehr so stark an, dass diese aus der Rastposition gelöst werden.

Die Kurbel 31 verschiebt nunmehr den Bremsbelag in der Drehrichtung zur Bremsscheibe 2, bis die von der Steuerung vorgegebene Position erreicht ist (Fig. 4).

Dabei verhält sich die Bewegungskomponente des Bremsbelages in Umfangsrichtung - parallel zur Bremsscheibenreibfläche - bzw. bzw. tangential bzw. parallel zur Tangentialen U des Kurbelzapfens nichtlinear, denn auf der Kreisbahn des Kurbelzapfens wird zunächst in Umfangsrichtung pro Zeiteinheit ein größerer Weg zurückgelegt als mit fortschreitender Bewegung des Kurbelzapfens 35 auf seiner Kreisbahn. Das Getriebe mit dem Kurbeltrieb ist also so ausgelegt, dass die Winkelbewegung am Elektromotor und am Abtriebszapfen in Umfangsrichtung nicht in eine lineare Bewegung des Bremsbelages sondern in eine verzögerte Bewegung umgesetzt wird.

Nunmehr sind drei Fälle zu unterscheiden.

### Fall 1

Der aktuelle Bremsbelagreibwert entspricht genügend genau dem Tangens des Rampenneigungswinkels in den Ausnehmungen 14 bzw. in den Druckflächen der Nachstellmuttern 13.

Die vorgegebene Position wird in diesem Fall mit einem nur geringen Verstellkraftaufwand erreicht.

### Fall 2

Der aktuelle Bremsbelagreibbeiwert ist erheblich größer als der Tangens des RampenNeigungswinkels in den Ausnehmungen 14 bzw. Druckflächen der Nachstellmuttern 13.

Durch die zu große Selbstverstärkung wird der Bremsbelag 20 stärker und weiter durch die Bremsscheibendrehbewegung mitgenommen als dies der vorgegebenen Position entspricht.

Auf die Kurbel 34 wird vom Bremsbelag eine Drehkraft in Bewegungsrichtung der Bremsscheibe 2 ausgeübt.

Da der elektrische Antriebsmotor 23 das Sonnenrad 27 des Planetengetriebes 26 und des zweiten Planetengetriebes 37 in Sollposition hält, bewirkt die weitere Drehung der Kurbel 34 und damit des Planetensterns 44 des zweiten Getriebes 37 eine Drehung des Außenrades bzw. innen- und außenverzahnten Außenringes 38 des zweiten Getriebes 37 und damit auch der beiden Nachstellmuttern 13.

Das Haltemoment der beiden Nachstellmuttern 13 wird dabei überwunden.

Durch die Drehung der Nachstellmuttern 13 wird der wirksame Rampen-Neigungswinkel α solange in Richtung abnehmender Selbstverstärkung verändert, bis die wirksame Selbstverstärkung genügend genau an den aktuellen Bremsbelag-Reibbeiwert angepasst ist.

### Fall 3

Fall der aktuelle Bremsbelag-Reibwert erheblich geringer ist als der Tangens des Rampen-Neigungswinkel α in den Ausnehmungen 14 an den Druckflächen des Nachstellmuttern 13, wird der Bremsbelag durch die geringe Selbstverstärkung nicht genügend mitgenommen. An der Kurbel 34 wird damit ein relativ hohes Antriebsmoment erforderlich, um den Bremsbelag 20 zu bewegen.

Infolge des am Hohlrad des Getriebes 24 wirksam werdenden Reaktionsdrehmomentes werden die Nachstellspindeln 5, 6 solange in Richtung einer Erhöhung des Selbstverstärkungsprozesses verdreht, bis der Tangens des wirksamen RampenNeigungswinkels α wieder genügend genau mit dem Bremsbelag-Reibbeiwert in Übereinstimmung gebracht ist.

### Phase 3 Lösen der Bremse

Zum Lösen der Bremse wird die Kurbel 34 und damit der Bremsbelag 20 durch den elektrischen Antriebsmotor in die Rastposition zurückgeführt.

Der dafür notwendige Kraftbedarf an der Kurbel ist gering, da die Selbstverstärkung im vorherigen Bremsvorgang angepasst wurde.

Beim Einrasten der Kurbel 34 in die Rastposition entsteht ein Drehmomentsprung.

Durch Auswertung der Betriebsdaten des el. Antriebsmotors (z.B. Drehzahl, Stromaufnahme) wird das Erreichen der Rastposition erkannt.

### Phase 4 - Einstellen des Lüftspiels und dessen Kontrolle

Da nunmehr die Kurbel 34 kraftschlüssig verrastet ist, wird bei weiterer Rückwärts-Drehbewegung des elektrischen Antriebsmotors 23 das Getriebe 26 wieder aktiviert, über welches nunmehr die Nachstellspindeln 12 zum Lösen der Bremse und zum Erzeugen des Lüftspiels um einen definierten Betrag zurückgedreht werden.

Durch das Anlegen der Bremsbeläge 20 an die Bremsscheibe 2 in der ersten Phase ist eine Kontrolle des Lüftspiels und durch definiertes Zurückfahren aus dieser Position die Lüftspieleinstellung realisiert.

Die Verschleißwerterfassung wird durch eine Auswertung des Positionssignals des elektrischen Antriebsmotors nach Lüftspieleinstellungen ermöglicht.

Nachfolgend wird kurz die gegebene Möglichkeit zur Bremsung bei einer Rückwärtsfahrt erläutert.

### Bremsungen bei Rückwärtsfahrt:

Zwischen einer Vorwärts- und einer Rückwärtsfahrt wird durch geeignete Maßnahmen, z.B. eine entsprechende Auswertung des Drehsignals z.B. des Rad-Drehzahlfühlers (beispielsweise ein ABS-Sensor) an einem hier nicht dargestellten Steuergerät an/in der Bremse oder an einem übergeordneten Steuergerät des Bremssystems unterschieden, das mit dem Elektromotor verbunden ist und/oder diesen ansteuert.

Über die Bremsenansteuerung wird nach Abschluss der Phase 1 die Kurbel 34 in der Drehrichtung angesteuert, welche der Bremsscheibendrehrichtung entspricht. Nachfolgend sei die Erfindung nochmals aus anderer Richtung betrachtet.

Zunächst sei das Grundprinzip der Fig. 1 mit nicht verstellbarer Rampensteigung nochmals näher erörtert. Zur Realisierung dieser Ausführungsform ist zunächst die Schaffung einer Ausnehmung 14 mit einer Rampenform in den Bremsstempeln 5, 6 notwendig.

Korrespondierend wird eine Gegenrampe in Belagdruckplatte 18 ausgebildet oder - besser - der Rollkörper 16 wird in der in der Belagdruckplatte 18 drehbar gelagert oder es wird eine Rampe in der Belagdruckplatte 18 ausgebildet und der Rollkörper im Bremsstempel gelagert (hier nicht dargestellt).

Damit die Rollkörper 16 an den Ausnehmungen der Muttern 13 der Bremsstempel 5, 6 hochlaufen und damit den Bremsbelag 20 gegen die Bremsscheibe verschieben, ist es notwendig, eine Verschiebung der Belagdruckplatte mit dem Bremsbelag in Umfangsrichtung, vorzugsweise durch ein koaxial zur Bremsscheibenlängsachse und parallel zu dieser angeordnetes Verstellelement (hier eine Kurbel 34) zu erreichen. Die Muttern 13 drehen sich vorzugsweise während des eigentlichen Bremsvorganges nicht.

Ein doppelsinniges Rampenprofil (in- und gegen die Umfangsrichtung U) im Bremsstempel 5, 6 ermöglicht dabei eine Selbstverstärkungswirkung in beiden Fahrtrichtungen.

Vorzugsweise wird der Kurbeltrieb 14 durch den Elektromotor 23 mit dem nachgeschaltetem Getriebe 24, 26 angetrieben.

Denkbar ist es, einen separaten Antrieb für die Bremsstempel vorzusehen oder aber Nachstell- und Kurbelantrieb zu kombinieren (Fig. 1 und Fig. 2). Letzteres hat den Vorteil, dass nur ein einziger Antriebsmotor für beide Funktionen benötigt wird.

Denkbar ist es dabei auch, eine Lüftspielüberwindung durch den separaten Nachstellantrieb vorzunehmen (Phase 1 der Funktionsbeschreibung).

Ebenfalls denkbar ist eine Lüftspielüberwindung durch den Kurbelantrieb mittels besonders "steiler Rampe" bei Verschiebungsbeginn.

Das doppelsinnige Rampenprofil (Ausnehmung 14) in den Nachstellkolben 5, 6 ermöglicht dabei eine Selbstverstärkungswirkung in beiden Fahrtrichtungen. Es ist eine Rad-Drehrichtungsabhängige Steuerung der Belagverschiebung realisierbar.

Nach Fig. 3 wird die Ausnehmung I3 bzw. Rampe im Bremsstempel als Kegelstumpfähnlicher Hohlkörper ausgebildet. Der Rollkörper wird wiederum in der Druckplatte 18 gelagert. Damit ist eine Anpassung der Rampensteigung an den Belagreibwert durch Verdrehen der Bremsstempel 5, 6 möglich. Das Verdrehen der Bremsstempel 5, 6 erfolgt durch einen separaten Antrieb 39 oder selbsttätig über ein verzweigendes Getriebe 26, welches die vom Antriebsmotor 23 erzeugte Drehbewegung in Abtriebsdrehbewegungen sowohl auf die Kurbel 34 als auch auf die Verdreheinrichtung 12 der Bremsstempel 5, 6 übertragen kann.

Das verzweigende Getriebe 26 ist vorzugsweise ein Planetengetriebe. Eine am Kurbelzapfen 35 wirksam werdende Verschiebekraft (Verschieben der Bremsbelageinheit durch die Kurbel 34 bei zu geringer Selbstverstärkung oder Ziehen der Kurbel 34 durch die Bremsbelageinheit bei zu hoher Selbstverstärkung) ruft im verzweigenden Getriebe 26 Reaktionsmomente hervor, welche bestrebt sind, an der Eingangswelle u/o an den Bremsstempel 5, 6 Drehbewegungen hervorzurufen. Wird nun an der Eingangswelle eine genügend hohe Haltekraft aufgebracht (z.B. durch den Antriebsmotor der über seine elektronische Steuerung die Position der Eingangswelle hält) so erfolgt eine Drehung an den Bremsstempeln 5, 6.

Bei geeigneter Zuordnung der Drehrichtung der Nachstellkolben 5, 6 zur Richtung der Kraftwirkung auf den Kurbelzapfen wird die Rampensteigung bei zu großer Selbstverstärkung (Belageinheit zieht am Kurbelzapfen) zu steileren Rampenwinkeln verdreht und bei zu geringer Selbstverstärkung (Kurbelzapfen schiebt die Belageinheit) zu flacheren Rampenwinkeln, d.h. im Sinne einer Vergrößerung der Selbstverstärkung verstellt.

Bei einer Version mit gestuft verstellbarer Rampensteigung sind mindestens zwei unter einem Winkel angeordnete Rampenbahnen unterschiedlicher Steigung vorgesehen. Dabei sind die Rollkörper wiederum in der Belagdruckplatte 18 gleitgelagert.

Eine Anpassung der Rampensteigung an den Belagreibwert erfolgt durch ein Umschalten des Bremsstempels 5, 6auf die besser angepasste Rampensteigung nach einem vorherigen Bremsvorgang, bei dem die Notwendigkeit des Umschaltens auftrat.

Das Verdrehen des Bremsstempels 5, 6 erfolgt durch einen separaten Antrieb oder selbsttätig, z.B. ähnlich wie vorstehend beschrieben.

Der Umschaltvorgang wird erst nach Beendigung der Bremsung ausgelöst, wobei die über das Getriebe auf die Bremsstempel wirkende Verstell-Drehbewegung in einem Übertragungselement elastisch eingespeichert und erst bei Lösen der Bremse aufgrund der dann wieder abnehmenden Drehbehinderung des Bremsstempels ausgeführt wird.

Die Drehbehinderung kann durch infolge der Bremskraft auf die Spindel wirkende Reibkräfte erzeugt werden oder infolge von Haltekräften die durch den elektrischen Antriebsmotor oder eine geschaltete Kupplung, z.B. eine elektromagnetische Kupplung, auf den Bremsstempel selbst oder ein Element der Überragungseinrichtung ausgeübt werden oder vorzugsweise durch die Kugeln bzw. Rollkörper, welche bei Bremsvorgängen in einer Rampenbahn außerhalb der Mitte des Bremsstempels befindlich sind und mittels der von den Bremsstempel übertragenen Bremskraft, der formschlüssigen Aufnahme in der Rampenbahn (Laufrille) sowie der exzentrisch zur Bremsstempelmitte befindlichen Position ein Haltemoment erzeugt.

Die Ausbildung der Laufrillen der Rampenbahnen erfolgt zweckmäßig in der Form, dass im Bereich kleiner Zuspannkräfte, d.h. geringer Exzentrizität der Kugel bzw. des Rollkörpers, die Rillentiefe gering ist und zum äußeren Durchmesser des Bremsstempels hin eine große Rillentiefe zur Erzielung hoher Tragfähigkeit realisiert wird.

Bei dieser Lösung besteht die Möglichkeit, dass im Bereich geringer Bremskräfte noch ein direktes Umschalten während des Bremsvorganges möglich ist. Erst bei Vorliegen höherer Bremskräfte wird die Kugel bzw. der Rollkörper in der Rampen-Laufrille eine Position einnehmen bei der ein Umschalten während der Bremsung nicht mehr möglich ist.

Vorzugsweise wird zum Antrieb der Bremsbelageinheit ein Kurbeltrieb eingesetzt. Alternativ zu einem Kurbeltrieb sind auch andere Zuspannelemente wie eine Exzenteranordnung u.dgl. denkbar, wenn diese zu einer nichtlinearen Bewegung der Bremsbelageinheit in Umfangsrichtung führen.

Die Steuerung der elektromechanischen Bremse erfolgt jeweils mittels einer Rechnereinheit an der Bremse, die ggf. vernetzt sind oder zum Beispiel mittels einem übergeordneten Rechner am Fahrzeug für eine oder mehrere Bremsen.

Es ist alternativ auch ein linearer Antrieb bei weitgehend analoger Anordnung denkbar. Anstelle des Kurbelzapfens wird dabei auf die Antriebswelle ein Zahnradsegment aufgesetzt, welches in eine Zahnstange auf dem Belagrücken eingreift (hier nicht dargestellt).

Bevorzugt wird jedoch der nicht lineare Antrieb eingesetzt.

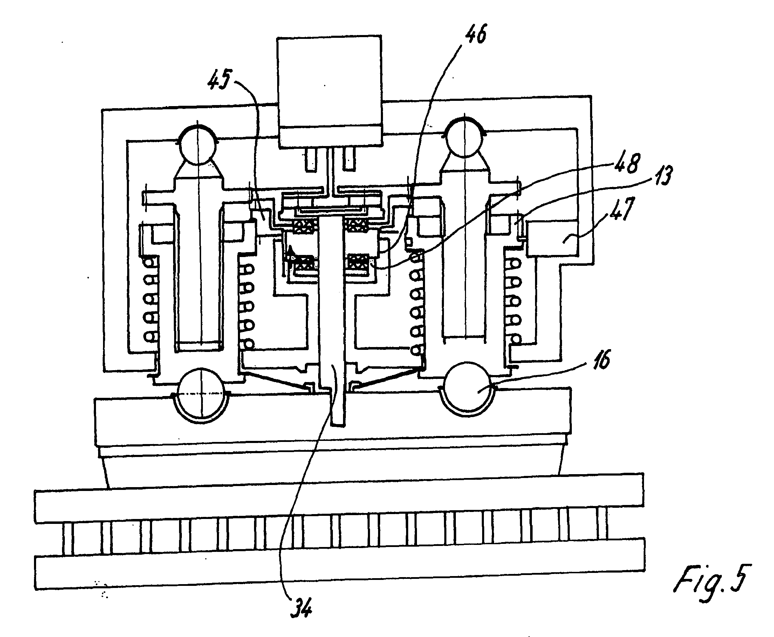

Fig. 5 zeigt eine weitere Variante der erfindungsgemäßen selbstverstärkenden Scheibenbremse, die weitegehend dem Ausführungsbeispiel aus Fig. 1 entspricht.

Wie im Ausführungsbeispiel der Fig. 1 besteht die Betätigungseinrichtung bzw. Zuspanneinheit aus den zwei, zum Zwecke der Verschleißnachstellung längenveränderlichen Nachstellkolben bzw. Bremsstempeln 5, 6, welche in ihrer der Bremsscheibe 2 zugewandten Druckfläche die Ausnehmungen 14 nach Art von Rampenkonturen aufweisen, an denen die Rollkörper 16 ablaufen, welche die von der Bremse erzeugte Zuspannkraft auf die Bremsbelageinheit bzw. auf die auf den Bremsbelag aufliegende Druckplatte übertragen.

Zusätzlich ist eine schaltbare Kupplung, hier z.B. eine Magnetkupplung 46, insbesondere Kupplung mit bistabil wirkendem Stellmagneten vorgesehen, welche dazu ausgelegt ist, z.B. an einer axial beweglichen Radialverzahnung 48 die Kurbel 34 in und aus dem Antriebsstrang zwischen Aktuator (Elektromotor) und Bremsbelageinheit zu schalten. Derart kann z.B. gezielt für Parkbremsungen zunächst oder sogar ausschließlich allein über die Bremsstempel 5, 6 eingebremst werden oder aber es können z.B. kleinere Anpassungsbremsungen allein über Verdrehen der Bremsstempel 5, 6 bzw. das Verändern der axialen Länge der Bremsstempel erfolgen. Wird dagegen eine "normale" Betriebsbremsung eingeleitet, wird die Kupplung umgeschaltet und dass Einbremsen erfolgt über die Kurbel 34.

Ergänzend ist nach Fig. 5 eine Umschalteinrichtung 47 zum Verdrehen der Bremsstempel, hier der Muttern von einer Laufbahn 14 a zur anderen Laufbahn 14b, vorgesehen. Diese Umschalteinrichtung 47 kann als separater Elektromotor ausgelegt sein oder aber als Umschaltmagnet oder dgl., der z.B. über eine Zahnstange oder dgl. eine der Muttern 13 um 90° dreht, wobei die andere der Muttern 13 z.B. über einen Zahnkranz 45 mitgenommen wird. Auf eine derartige Einrichtung kann

Anzumerken ist noch, dass sich die vorliegende Bremsenkonstruktionen auch hinsichtlich ihres Regelverhaltens besonders vorteilhaft einzustufen sind.

Wird beispielsweise eine Normall:raftregelung durchgeführt, die nach dem Stand der Technik als alleinige Regelung nicht für einsetzbar gehalten wird, wirkt es sich vorteilhaft aus, das beispielsweise über die Abstützung der Bremsstempel am Bremssattel diese Normalkraft sehr genau ermittelbar ist (parallele IÜ-aft zur Längsachse der Bremsstempel, indem beispielsweise entsprechende Sensoren an den Bremsstempeln und/oder angrenzenden Elementen angeordnet werden.

| **Bezugszeichen** | |
|---|---|
| Bremssattel | 1 |
| Bremsscheibe | 2 |
| Öffnungen | 3,4 |
| Bremsstempel | 5, 6 |
| Lagerkugeln | 7, 8 |
| Gleitlagerschalen | 9, 10 |
| Rückwand | 11 |
| Spindel | 12 |
| Mutter | 13 |
| rampenartige Ausnehmung | 14 |
| Rollkörper | 16 |
| Gleitlagerschalen | 17 |
| Ausnehmungen | 15 |
| Druckplatte | 18 |
| Trägerplatte | 19 |
| Bremsbelag | 20 |
| Bremsbelagmaterial | 21 |
| Klammerfeder | 22 |
| Antriebsmotor | 23 |
| Untersetzungsgetriebe | 24 |
| Abtriebswelle | 25 |
| Getriebe | 26 |
| Sonnenrad | 27 |
| Planetenräder | 28 |
| Ring | 29 |
| Zahnräder | 30 |
| Flansch | 31 |
| Druckfedern | 32 |
| Planetenstern | 33 |
| Kurbel | 34 |
| Kurbelzapfen | 35 |
| Öffnung | 36 |
| Getriebe | 37 |
| Ring | 38 |
| Verstellaktuator | 39 |
| Abtriebswelle | 40 |
| Zahnrad | 41 |
| Riementrieb | 42 |
| Planetenräder | 43 |
| Planetenstern | 44 |
| Zahnkranz | 45 |
| Magnetkupplung | 46 |
| Umschalteinrichtung | 47 |
| Rampenwinkel | α |
| Längsachse | LA |
| Unfangsrichtung | U |
| Bremsscheibenachse | BA |

## Patentansprüche

1. Scheibenbremse in selbstverstärkender Bauart, mit elektrischem Aktuator, bei der eine vom Aktuator aufgebrachte Betätigungskraft mit Hilfe einer zwischen Aktuator und Bremsbelag angeordneten Selbstverstärkungseinrichtung verstärkt wird, mit folgenden Merkmalen:
a) eine Zuspanneinheit zum Zuspannen wenigstens einer Bremsbelageinheit (20) einseits einer Bremsscheibe (2) unter Durchführung einer Zuspannbewegung der Bremsbelageinheit (20) zur Bremsscheibe (2), die in wenigstens eine parallel und wenigstens eine relativ zur Bremsscheibendrehachse (BA) tangential verlaufende Bewegungskomponente (Richtung U) zerlegbar ist,
b) wenigstens einem elektromotorischen Antrieb (23) als Aktuator zum Betätigen der Zuspanneinheit,
**dadurch gekennzeichnet, dass**
c) die Zuspanneinheit ferner wenigstens zwei oder mehr Bremsstempel (Nachstellkolben 5, 6) mit veränderlicher axialer Länge aufweist,
d) wobei jede der Druckflächen der wenigstens zwei oder mehr Bremsstempel (5s, 6) an ihrer der Bremsbelageinheit zugewandten Seite mit einer Ausnehmung (14) mit einer rampenförmigen Kontur versehen ist, in die jeweils ein Wälz- bzw. Rollkörper (16) eingreift, der sich einerseits an der rampenförmigen Kontur der Druckflächen der Bremsstempel (5, 6) und andererseits an der Bremsbelageinheit abstützt.

2. Scheibenbremse nach Anspruch 1, **dadurch gekennzeichnet, dass** der wenigstens eine elektromotorische Antrieb (23) zum Betätigen der Zuspanneinheit auch zum Antrieb der Bremsstempel zumindest zum Verändern der axialen Länge der Bremsstempel dient.

3. Scheibenbremse nach Anspruch 1, **dadurch gekennzeichnet, dass** ein weiterer elektromotorischer Antrieb zum Antrieb der Bremsstempel zumindest zum Verändern der axialen Länge der Bremsstempel vorgesehen ist.

4. Scheibenbremse nach einem der vorstehenden Ansprüche, dass die Bremsstempel parallel zur Bremsscheibenachse BA ausgerichtet sind und sich an ihrem einen Ende am Bremssattel (1) oder einem mit dem Bremssattel (1) verbundenen Bauteil über eine Lagereinrichtung (7, 8; 9, 10) abstützen, die jeweils eine Drehung wenigstens eines Teils der Bremsstempel um deren Längsachse (LA) zulässt.

5. Scheibenbremse nach einem der vorstehenden Ansprüche, **dadurch gekennzeichnet, dass** die Bremsstempel (5, 6) an ihrer einer Bremsbelageinheit zugewandten Seite mit einer Druckfläche versehen sind, die eine Ausnehmung (14) mit einer rampenförmigen Kontur aufweist, in die jeweils ein Rollkörper (16) eingreift.

6. Scheibenbremse nach Anspruch 5, **dadurch gekennzeichnet, dass**, die Rollkörper (16) ferner jeweils in eine korrespondierende Ausnehmung, d.h. in eine Ausnehmung mit korrespondierender Geometrie in der Bremsbelageinheit (18, 20, 21) eingreifen.

7. Scheibenbremse nach einem der vorstehenden Ansprüche, **dadurch gekennzeichnet, dass**, die Rollkörper (16) jeweils in eine Rampenkontur in der Bremsbelageinheit (18, 20, 21) eingreifen.

8. Scheibenbremse nach einem der vorstehenden Ansprüche, **dadurch gekennzeichnet, dass** die Rollkörper als Kugeln (16) und die Ausnehmungen (14) kegelflächenförmig ausgebildet sind.

9. Scheibenbremse nach einem der Ansprüche 1 bis 7, **dadurch gekennzeichnet, dass** die Rollkörper als Kugeln (16) und die Ausnehmungen als Laufbahnen ausgebildet sind.

10. Scheibenbremse nach einem der Ansprüche 1 bis 7, **dadurch gekennzeichnet, dass** die Rollkörper (16) als Rollen und die Ausnehmungen (14) rampenförmig ausgebildet sind.

11. Scheibenbremse nach einem der Ansprüche 1 bis 7, **dadurch gekennzeichnet, dass** die Ausnehmungen (14) doppelsinnig rampenförmig oder kegelflächenförmig ausgebildet sind.

12. Scheibenbremse nach Anspruch 10 oder 11, **dadurch gekennzeichnet, dass** die tiefste Stelle (14c) der Rampen ist jeweils vorteilhaft so ausgestaltet, dass die Rollkörper, insbesondere Kugeln an der tiefsten Stelle verrastet sind und nur gegen eine Mindestrastkraft aus der Vertiefung lösbar sind.

13. Scheibenbremse nach Anspruch 8 oder 11, **dadurch gekennzeichnet, dass** die kegelflächenförmigen Ausnehmungen (14) in Umfangsrichtung um die Bremsstempellängsachse (LA) einen konstanten Öffnungswinkel (α) zur Bremsstempellängsachse (LA) aufweisen.

14. Scheibenbremse nach Anspruch 13, **dadurch gekennzeichnet, dass** die kegelflächenförmigen Ausnehmungen (14) in Umfangsrichtung um die Bremsstempellängsachse (LA) einen sich verändernden Öffnungswinkel (α) zur Bremsstempellängsachse (LA) aufweisen.

15. Scheibenbremse nach Anspruch 14, **dadurch gekennzeichnet, dass** die kegelflächenförmigen Ausnehmungen (14) in Umfangsrichtung um die Bremsstempellängsachse (LA) einen sich stufenweise oder kontinuierlich verändernden Öffnungswinkel (α) zur Bremsstempellängsachse (LA) aufweisen.

16. Scheibenbremse nach einem der vorstehenden Ansprüche, **dadurch gekennzeichnet, dass** in die Ausnehmungen (14) in der Druckplatte (18) der Bremsbelageinheit (18,20) Gleitlagerschalen (17) eingesetzt sind.

17. Scheibenbremse nach einem der vorstehenden Ansprüche, **dadurch gekennzeichnet, dass** sich die beiden Bremsstempel (5, 6) jeweils an ihren von der Bremsscheibe (2) abgewandten Enden im Inneren des Bremssattels (1) über die Lagereinrichtungen, vorzugsweise Lagerkugeln, (7, 8) oder ebene Gleitlager, Ringleitlager oder dgl., des Bremssattels abstützen.

18. Scheibenbremse nach einem der vorstehenden Ansprüche, **dadurch gekennzeichnet, dass** die Bremsstempel (5, 6) jeweils eine mit einem Außengewinde versehene Spindel (12) aufweisen, auf der eine Mutter (13) mit einem korrespondierenden Innengewinde verdrehbar angeordnet ist.

19. Scheibenbremse nach Anspruch 18, **dadurch gekennzeichnet, dass** die Muttern (13) jeweils eine Öffnung (3, 4) im Bremssattel oder einer Verschlussplatte am Bremssattel durchgreifen und an ihrer von der Bremsscheibe abgewandten Seite einen Flansch (31) aufweisen, wobei zwischen dem Flansch (31) und der Innenwandung des Bremssattels (1) jeweils Druckfedern (32) angeordnet sind.

20. Scheibenbremse nach einem der vorstehenden Ansprüche, **dadurch gekennzeichnet, dass** der Elektromotor (23) direkt oder über wenigstens eines oder mehrere Getriebe (24, 26, 37) eine Kurbel (34) dreht, die einen Kurbelzapfen (35) aufweist, der zur Bewegung der Bremsbelageinheit tangential zur Bremsscheibe, d.h. parallel zur Bremsscheibenreibfläche, dient.

21. Scheibenbremse nach einem der vorstehenden Ansprüche, **dadurch gekennzeichnet, dass** die Bremsbelageinheit die Druckplatte (18) aufweist, die an der Bremsbelagträgerplatte (19) eines Bremsbelages (20) anliegt.

22. Scheibenbremse nach Anspruch 20, **dadurch gekennzeichnet, dass** der Kurbelzapfen (35) sich parallel zur Bremsscheibenachse (BA) erstreckt und in eine korrespondierend ausgerichtete Öffnung in der Druckplatte (18) eingreift.

23. Scheibenbremse nach Anspruch 22, **dadurch gekennzeichnet, dass** die Öffnung (35) in der Druckplatte (18) mittig zwischen den beiden Bremsstempeln (5, 6) angeordnet ist.

24. Scheibenbremse nach Anspruch 22 oder 23, **dadurch gekennzeichnet, dass** die Öffnung (36) in der Druckplatte (18) kulissenartig ausgebildet ist, vorzugsweise als Langloch, das sich senkrecht zu einer Ebene durch die beiden Bremsstempel (5, 6) erstreckt.

25. Scheibenbremse nach einem der Ansprüche 20 bis 24, **gekennzeichnet durch** ein umschaltbares Getriebe (26) zum Umschalten des Elektromotors (23) zwischen einer Stellung zum Antrieb der Kurbel (34) und einer Stellung zum Verdrehen vorzugsweise der Spindeln (12) der Bremsstempel (5, 6).

26. Scheibenbremse nach einem der vorstehenden Ansprüche, **gekennzeichnet durch** einen federbelasteten Kugelrastmechanismus zum selbsttätigen Umschalten des Elektromotors.

27. Scheibenbremse nach Anspruch 20, **dadurch gekennzeichnet, dass** das Getriebe (26) ein Planetengetriebe ist.

28. Scheibenbremse nach einem der Ansprüche 18 bis 27, **gekennzeichnet durch** eine Einrichtung zur selbsttätigen Drehausrichtung der mit veränderlichem Kegelöffnungswinkel (α) in den Ausnehmungen (14) versehenen Bremsstempel (5, 6), insbesondere zur Drehausrichtung der Muttern (13), vorzugsweise in Abhängigkeit vom Reibbeiwert.

29. Scheibenbremse nach Anspruch 28, **dadurch gekennzeichnet, dass** die Einrichtung zur Ausrichtung der Bremsstempel, insbesondere deren Muttern (13), als weiteres Getriebe, insbesondere als weiteres Planetengetriebe ausgebildet ist.

30. Scheibenbremse nach Anspruch 28 oder 29, **dadurch gekennzeichnet, dass** die Einrichtung zur selbsttätigen Ausrichtung der Bremsstempel, insbesondere deren Muttern (13), als weiterer Antrieb mit einem Elektromotor ausgebildet ist.

31. Scheibenbremse nach einem der vorstehenden Ansprüche, **dadurch gekennzeichnet, dass** der Bremssattel ein Festsattel ist und dass auf der der Zuspannseite gegenüberliegenden Seite der Bremsscheibe separate Nachstelleinrichtungen angeordnet sind.

32. Scheibenbremse nach einem der vorstehenden Ansprüche, **dadurch gekennzeichnet, dass** der elektromotorische Antrieb als Aktuator mit einer Steuerungs- und/oder Regelungseinrichtung gekoppelt ist, die dazu ausgelegt ist, die Position des Stellgliedes und damit des Bremsbelages zu steuern oder zu regeln.

33. Scheibenbremse nach einem der Ansprüche 20 bis 32, **gekennzeichnet durch** eine schaltbare Kupplung, welche dazu ausgelegt ist, die Kurbel (34) in und aus dem Antriebsstrang zwischen Bremsbelageinheit und Elektromotor zu schalten.

## Claims

1. A self-energising disc brake having an electric actuator in which an activation force applied to the actuator is amplified using a self-energising device arranged between the actuator and brake lining, having the following features:
a) a brake application unit for applying at least one brake lining unit (20) to one side of a brake disc (20) by carrying out an application movement of the brake lining unit (20) with respect to the brake disc (2), which movement can be decomposed into at least one movement component which extends parallel to the rotational axis (BA) of the brake disc and at least one movement component (direction U) which extends tangentially to the rotational axis (BA) of the brake disc,
b) at least one electromotive drive (20) as actuator for activating the brake application unit,
**characterised in that**
c) the brake application unit also has at least two or more brake plungers (adjustment plungers 5, 6),
d) each of the pressure surfaces of the at least two or more brake plungers (5s, 6) is provided, on its side facing the brake lining unit, with a recess (14) with a ramp shaped contour into each of which a rolling element (16) engages, said rolling element (16) being supported at one end on the ramp shaped contour of the pressure surfaces of the brake plungers (5, 6) and at the other end on the brake lining unit.

2. The disc brake as claimed in claim 1, **characterised in that** the at least one electromotive drive (23) also serves to activate the brake application unit in order to drive the brake plungers at least in order to change the axial length of the brake plungers.

3. The disc brake as claimed in claim 1, **characterised in that** a further electromotive drive is provided for driving the brake plungers at least in order to change the axial length of the brake plungers.

4. The brake disc as claimed in one of the preceding claims, that the brake plungers are oriented parallel to the axis BA of the brake disc and are supported at one of their ends on the brake caliper (1) or by means of a bearing device (7, 8; 9, 10) on a component which is connected to the brake caliper (1), said bearing device (7, 8; 9, 10) in each case permitting at least some of the brake plungers to rotate about their longitudinal axis (LA).

5. The disc brake as claimed in one of the preceding claims, **characterised in that** the brake plungers (5, 6) are provided on their side facing a brake lining unit with a pressure face which has a recess (14) with a ramp-shaped contour, into each of which a rolling element (16) engages.

6. The disc brake as claimed in claim 5, **characterised in that** the rolling elements (16) also each engage in a corresponding recess, that is in a recess with a corresponding geometry in the brake lining unit (18, 20, 21).

7. The disc brake as claimed in one of the preceding claims, **characterised in that** the rolling elements (16) each engage in a ramp contour in the brake lining unit (18,20,21).

8. The disc brake as claimed in one of the preceding claims, **characterised in that** the rolling elements are embodied as balls (16) and the recesses (14) are in the form of conical surfaces.

9. The disc brake as claimed in one claims 1 to 7, **characterised in that** the rolling elements are embodied as balls (16) and the recesses as raceways.

10. The disc brake as claimed in one of claims 1 to 7, **characterised in that** the rolling elements (16) are embodied as rollers and the recesses (14) in the form of ramps.

11. The disc brake as claimed in one of claims 1 to 7, **characterised in that** the recesses (14) are embodied in the form of dual direction ramps or conical surfaces.

12. The disc brake as claimed in claim 10 or 11, **characterised in that** the lowest point (14c) of the ramps is advantageously configured in each case in such a way that the rolling elements, in particular balls, are latched at the lowest point and can be released from the depression only counter to a minimum latching force.

13. The disc brake as claimed in claim 8 or 11, **characterised in that** the recesses (14) which are in the form of conical surfaces have a constant angle (α) of aperture with respect to the longitudinal axis (LA) of the brake plungers, in the circumferential direction around the longitudinal axis (LA) of the brake plungers.

14. The disc brake as claimed claim 13, **characterised in that** the recesses (14) which are in the form of conical surfaces have changing angles (α) of aperture with respect to the longitudinal axis (LA) of the brake plungers, in the circumferential direction around the longitudinal axis (LA) of the brake plungers.

15. The disc brake as claimed in claim 14, **characterised in that** the recesses (14) which are in the form of conical surfaces have an incrementally or continuously changing angle (α) of aperture with respect to the longitudinal axis (LA) of the brake plunger, in the circumferential direction around the longitudinal axis (LA) of the brake plungers.

16. The disc brake as claimed in one of the preceding claims, **characterised in that** plain bearing shells (17) are inserted into the recesses (14) in the pressure plate (18) of the brake lining unit (18, 20).

17. The disc brake as claimed in one of the preceding claims, **characterised in that** the two brake plungers (5, 6) are each supported at their ends facing away from the brake disc (2) in the interior of the brake caliper (1) by means of the bearing devices, preferably ball bearings (7, 8) or flat plain bearings, annular guiding bearings or the like, of the brake caliper.

18. The disc brake as claimed in one of the preceding claims, **characterised in that** the brake plungers (5, 6) each have a spindle (12) which is provided with an external thread and on which a nut (13) with a corresponding internal thread is arranged in a rotatable fashion.

19. The disc brake as claimed in claim 18, **characterised in that** the nuts (13) each engage through an opening (3, 4) in the brake caliper or a closure plate on the brake caliper and have a flange (31) at their side facing away from the brake disc, wherein pressure springs (32) are arranged in each case between the flange (31) and the internal wall of the brake caliper (1).

20. The disc brake as claimed in one of the preceding claims, **characterised in that** the electric motor (23) rotates a crank (34) directly or by means of at least one or more gear mechanisms (24, 26, 37), said crank (34) having a crank tappet (35) which serves to move the brake lining unit tangentially in relation to the brake disc, that is parallel to the friction surface of the brake disc.

21. The disc brake as claimed in one of the preceding claims, **characterised in that** the brake lining unit has the pressure plate (18) which bears against the brake lining carrier plate (19) of a brake lining (20).

22. The disc brake as claimed in claim 20, **characterised in that** the crank tappet (35) extends parallel to the axis (BA) of the brake disc and engages in a correspondingly aligned opening in the pressure plate (18).

23. The disc brake as claimed in claim 22, **characterised in that** the opening (35) in the pressure plate (18) is arranged in the centre between the two brake plungers (5, 6).

24. The disc brake as claimed in claim 22 or 23, **characterised in that** the opening (36) in the pressure plate (18) is embodied in the manner of a connecting link, preferably as an elongated hole, which extends perpendicularly to a plane through the two brake plungers (5, 6).

25. The disc brake as claimed in one of claims 20 to 24, **characterised by** a shiftable gear mechanism (26) for shifting the electric motor (23) between a position for driving the crank (34) and a position for rotating, preferably, the spindles (12) of the brake plungers (5, 6).

26. The disc brake as claimed in one of the preceding claims, **characterised by** a spring-loaded ball catch mechanism automatically shifting the electric motor.

27. The disc brake as claimed in claim 20, **characterised in that** the gear mechanism (26) is a planetary gear mechanism.

28. The disc brake as claimed in one of claims 18 to 27, **characterised by** a device for automatically rotationally orienting the brake plungers (5, 6) which are provided with a variable conical aperture angle (α) in the recesses (14), in particular for rotationally orienting the nuts (13), preferably as a function of the coefficient of friction.

29. The disc brake as claimed in claim 28, **characterised in that** the device is designed to orient the brake plungers, in particular their nuts (13), as a further gear mechanism, in particular as a further planetary gear mechanism.

30. The disc brake as claimed in claim 28 or 29, **characterised in that** the device is designed to automatically orient the brake plungers, in particular their nuts (13) as a further drive with an electric motor.

31. The disc brake as claimed in one of the preceding claims, **characterised in that** the brake caliper is a fixed caliper and **in that** separate adjustment devices are arranged on the side of the brake disc opposite the application side.

32. The disc brake as claimed in one of the preceding claims, **characterised in that** the electromotive drive is coupled as an actuator to an open-loop and/or closed-loop control device which is configured to perform an open-loop or closed-loop control of the position of the activator element and thus of the brake lining.

33. The disc brake as claimed in one of claims 20 to 32, **characterised by** an engagable clutch which is configured to switch the crank (34) in and out of the drive train between the brake lining unit and the electromotor.

## Revendications

1. Frein à disque en conception à renfort automatique, à un acteur électrique, dans lequel un effort d'actionnement appliqué par ledit acteur est renforcé moyennant un dispositif de renfort automatique disposé entre ledit acteur et la garniture de frein, présentant les caractéristiques suivantes :
a) une unité de serrage à serrer au moins une garniture de frein (20) d'un côté d'un disque de frein (2), en réalisant un mouvement de serrage de ladite garniture de frein (20) vers ledit disque de frein (2), au mouvement de serrage de frein étant apte à être décomposé en au moins un composant de mouvement s'étendant en parallèle et en au moins un composant de mouvement (direction U) s'étendant tangentiellement relativement à l'axe de révolution du disque de frein (BA (direction U),
b) au moins un dispositif d'entraînement électromoteur (23) en tant que l'acteur à commander ladite unité de serrage de frein,
**caractérisé en ce**
c) **que** ladite unité de serrage de frein comprend, au plus, au moins deux ou plus pistons de frein (pistons de rattrapage 5, 6) à une longueur axiale variable,
d) dans lequel chacune des aires de compression desdits au moins deux ou plus pistons de frein (5, 6) est pourvue d'un creux (14) à contour en rampe de son côté en face de ladite unité à garniture de frein, dans lequel se trouve en prise un corps de roulement ou respectivement roulant (16) respectif, qui s'appuie, d'un côté, audit contour en rampe desdites aires de pression desdits pistons de frein (5, 6) et, d'autre côté, à ladite unité à garniture de frein.

2. Frein à disque selon la revendication 1, **caractérisé en ce que** ledit au moins un dispositif d'entraînement électromoteur (23) à actionner ladite unité de serrage de frein sert également à entraîner lesdits pistons de frein au moins afin de varier la longueur axiale desdits pistons de frein.

3. Frein à disque selon la revendication 1, **caractérisé en ce qu'**un dispositif d'entraînement électromoteur supplémentaire est disposé pour l'entraînement desdits pistons de frein au moins afin de varier la longueur axiale desdits pistons de frein.

4. Frein à disque selon une quelconque des revendications précédentes, **caractérisé en ce que** lesdits pistons de frein sont orientés en parallèle à l'axe (BA) du disque de frein et s'appuient, par leurs premières extrémités, à l'étrier de frein (1) ou à un composant relié audit étrier de frein (1) via un moyen de logement (7, 8 ; 9, 10), qui permet une révolution respective d'au moins une partie desdits pistons de frein autour de leur axe longitudinale (LA).

5. Frein à disque selon une quelconque des revendications précédentes, **caractérisé en ce que** lesdits pistons de frein (5, 6) sont pourvus d'une aire de pression de leur côté en face de ladite unité à garniture de frein, laquelle comprend un creux (14) ayant un contour en rampe, dans lequel se trouve en prise un corps roulant (16) respectif.

6. Frein à disque selon la revendication 5, **caractérisé en ce que** chacun desdits corps roulants (16) se trouve en prise, au plus, dans un creux correspondant respectif, c'est-à-dire dans un creux ayant une géométrie correspondante, dans ladite unité à garniture de frein (18, 20, 21).

7. Frein à disque selon une quelconque des revendications précédentes, **caractérisé en ce que** chacun desdits corps roulants (16) se trouve en prise dans un contour en rampe dans ladite unité à garniture de frein (18, 20, 21).

8. Frein à disque selon une quelconque des revendications précédentes, **caractérisé en ce que** lesdits corps roulants (16) sont conçus sous forme des billes et **en ce que** lesdits creux sont configurés sous forme des surfaces coniques.

9. Frein à disque selon une quelconque des revendications 1 à 7, **caractérisé en ce que** lesdits corps roulants (16) sont conçus sous forme de billes et **en ce que** lesdits creux sont configurés sous forme des voies de roulement.

10. Frein à disque selon une quelconque des revendications 1 à 7, **caractérisé en ce que** lesdits corps roulants (16) sont conçus sous forme des rouleaux et **en ce que** lesdits creux (14) présentent une configuration en rampe.

11. Frein à disque selon la revendication 10 ou 11, **caractérisé en ce que** lesdits creux (14) présentent une configuration en rampe à double sens ou en surface conique.

12. Frein à disque selon la revendication 10 ou 11, **caractérisé en ce que** le point le plus bas (14c) desdites rampes est configuré, de manière avantageuse respective, d'une telle façon, que lesdits corps roulants, en particulier les billes, soient arrêtés à la position la plus basse et ne soient dégagés dudit creux que l'encontre d'un minimum d'effet d'arrêt.

13. Frein à disque selon la revendication 8 ou 11, **caractérisé en ce que** lesdits creux en surface conique présentent un angle d'ouverture (α) constant relatif à l'axe longitudinal dudit piston de frein (LA) en sens périphérique autour de l'axe longitudinal dudit piston de frein (LA).

14. Frein à disque selon la revendication 13, **caractérisé en ce que** lesdits creux en surface conique (14) présentent un angle d'ouverture (α) variant relatif à l'axe longitudinal dudit piston de frein (LA) en sens périphérique autour de l'axe longitudinal dudit piston de frein (LA).

15. Frein à disque selon la revendication 14, **caractérisé en ce que** lesdits creux en surface conique (14) présentent un angle d'ouverture (α), qui varie en gradins ou en continu, relatif à l'axe longitudinal dudit piston de frein (LA) en sens périphérique autour de l'axe longitudinal dudit piston de frein (LA).

16. Frein à disque selon une quelconque des revendications précédentes **caractérisé en ce que** des coquilles de coussinet lisse (17) sont insérées dans lesdits creux (14) dans ladite plaque presseuse (18) de ladite unité à garniture de frein (18, 20).

17. Frein à disque selon une quelconque des revendications précédentes, **caractérisé en ce que** chacun desdits deux pistons de frein (5, 6) s'appuie, par son extrémité opposée audit disque de frein (2), à l'intérieur dudit étrier de frein (1) via des moyens de logement, de préférence des billes de portée (7, 8) ou des paliers lisses plans, des paliers lisses annulaires ou moyens similaires, dudit étrier de frein.

18. Frein à disque selon une quelconque des revendications précédentes, **caractérisé en ce que** chacun desdits deux pistons (5, 6) présente une broche (12) respective, pourvue d'un filetage extérieur, sur laquelle est disposée, de façon rotative, un écrou (13) à un filetage intérieur correspondant.

19. Frein à disque selon la revendication 18, **caractérisé en ce que** chacun desdits écrous (13) est passé à travers d'une ouverture (3, 4) dans ledit étrier de frein ou dans un plaque de fermeture audit étrier de frein et présente, de son côté opposé dudit disque de frein, une flasque (31), aux ressorts de compression (32) respectifs étant disposés entre ladite flasque (31) et la paroi intérieure dudit étrier de frein.

20. Frein à disque selon une quelconque des revendications précédentes, **caractérisé en ce que** ledit moteur électrique (23) tourne une manivelle (34) directement ou via au moins un ou plusieurs mécanismes de transmission (24, 26, 37), qui comprend un tourillon de manivelle (35) servant au mouvement de ladite unité à garniture de frein en sens tangentiel relatif audit disque de frein, c'est-à-dire en parallèle à l'aire de friction dudit disque de frein.

21. Frein à disque selon une quelconque des revendications précédentes, **caractérisé en ce que** ladite unité à garniture de frein comprend ladite plaque presseuse (18), qui porte contre ledit plaque porteur de garniture de frein (19) d'une garniture de frein (20).

22. Frein à disque selon la revendication 20, **caractérisé en ce que** ledit tourillon de manivelle (35) s'étend en parallèle à l'axe du disque de frein (BA) et se trouve en prise dans une ouverture à orientation correspondante dans la plaque presseuse (18).

23. Frein à disque selon la revendication 22, **caractérisé en ce que** ladite ouverture (35) est formée dans ladite plaque presseuse (18) en position centrée entre lesdits deux pistons de frein (5, 6).

24. Frein à disque selon la revendication 22 ou 23, **caractérisé en ce que** ladite ouverture (36) dans ladite plaque presseuse (18) a une configuration en coulisse, de préférence en trou allongé, qui s'étend en sens orthogonal relativement à un plan par lesdits deux pistons de frein (5, 6).

25. Frein à disque selon une quelconque des revendications 20 à 24, **caractérisé par** un mécanisme de transmission à rapport variable (26) à commuter ledit moteur électrique (23) entre une position d'entraînement de ladite manivelle (34) et une position de torsion desdites broches (12) desdits pistons de frein (5, 6), de préférence.

26. Frein à disque selon une quelconque des revendications précédentes, **caractérisé par** un mécanisme de crantage à bille, chargé par ressort, pour la commutation automatique dudit moteur électrique.

27. Frein à disque selon la revendication 20, **caractérisé en ce que** ledit mécanisme de transmission (26) est un engrenage planétaire.

28. Frein à disque selon une quelconque des revendications 18 à 27, **caractérisé par** un dispositif d'orientation du sens de révolution automatique desdits pistons de frein (5, 6) dotés d'un angle d'ouverture conique variable (α) dans lesdits creux (14), en particulier pour l'orientation du sens de révolution desdits écrous (13), de préférence en fonction du coefficient de friction.

29. Frein à disque selon la revendication 28, **caractérisé en ce que** ledit moyen d'orientation du sens de révolution desdits pistons de frein, en particulier de leurs écrous (13), est conçu sous forme d'un engrenage supplémentaire, en particulier en tant qu'un engrenage planétaire supplémentaire.

30. Frein à disque selon la revendication 28 ou 29, **caractérisé en ce que** ledit moyen d'orientation automatique desdits pistons de frein, en particulier de leurs écrous (13), est conçu sous forme d'un dispositif d'entraînement supplémentaire à un moteur électrique.

31. Frein à disque selon une quelconque des revendications précédentes, **caractérisé en ce que** ledit étrier de frein est un étrier fixe, et **en ce que** des moyens de rattrapage séparés sont disposés du côté du disque de frein, qui est opposé au côté de serrage de frein.

32. Frein à disque selon une quelconque des revendications précédentes, **caractérisé en ce que** ledit dispositif d'entraînement électromoteur en tant que l'acteur est accouplé à un moyen de commande et/ou de réglage, qui est conçu à la fin de commander ou régler la position de l'élément final et donc de ladite garniture de frein.

33. Frein à disque selon une quelconque des revendications 20 à 32, **caractérisé par** un dispositif d'accouplement embrayable, qui est conçu à la fin d'embrayer ladite manivelle (34) et de la débrayer de la ligne d'entraînement entre ladite unité à garniture de frein et ledit moteur électrique.
